# EUROPÄISCHE PATENTANMELDUNG

(11) **EP 1 518 732 A1**
(43) Veröffentlichungstag der Anmeldung: **30.03.2005**
(21) Anmeldenummer: 03103538.9
(22) Anmeldetag: 24.09.2003
(51) Int. Cl.: B60J 7/22

(54) **Windabweiser für ein Cabriolet-Fahrzeug**

(71) Anmelder: Ford Global Technologies, LLC, A subsidary of Ford Motor Company, Dearborn, MI 48126 (US)
(72) Erfinder: Wendelmuth, Harald, 56112 Lahnstein (DE)
(74) Vertreter: Drömer, Hans-Carsten, Dr.-Ing.

(57) **Zusammenfassung**

Windabweisvorrichtung für einen mit einem zurückklappbaren Verdeck versehenen Personenkraftwagen (1), insbesondere für ein Cabriolet oder einen Roadster, mit einem Luftstromleitelement (10), wobei zur Verringerung der Windturbulenzen, insbesondere im Bereich der hinteren Sitzreihe (4), das Luftstromleitelement (10,110,210,310,410) in seiner Wirkstellung im Bereich hinter und oberhalb des Kopfbereichs der ersten Sitzreihe (3,303,403) derart angeordnet ist, daß es den von der Oberkante des Windschutzscheibenrahmens abfließenden Luftstrom (L) zumindest teilweise über auf der hinteren Sitzreihe (4) befindliche Insassen hinwegleitet.

## Beschreibung

Die Erfindung betrifft eine Windabweisvorrichtung für einen mit einem zurückklappbaren Verdeck versehenen Personenkraftwagen, insbesondere für ein Cabriolet oder für einen Roadster, mit einem Luftstromleitelement.

Bei der Fahrt in einem Personenkraftwagen mit geöffneten Verdeck beispielsweise in einem Cabriolet oder Roadster treten bei zunehmender Geschwindigkeit, insbesondere oberhalb von 80 km/h von der Windschutzscheibe ausgehende und den Fahrgastraum durchsetzende Windwirbel oder Turbulenzen auf, die als besonders unangenehm empfunden werden.

Zur Vermeidung dieser Wirbel ist es bekannt Windschutzvorrichtungen vorzusehen. Zwei Arten von unterschiedlich wirkenden Windschutzvorrichtungen sind bekannt: Windschotts und Deflektoren.

Die Windschotts umfassen einen Windschutzteil, der in Wirkstellung sich nach oben erstreckt und in der Regel hinter der ersten Sitzreihe angeordnet ist. Bei einer ersten Bauart besteht der Windschutzteil aus einem feinmaschigen Gitter oder Netz, das an einem eigenen Rahmen oder an Karosserieteilen aufgespannt ist. Auch die Verwendung von Glas- oder Kunststoffplatten für den Windschutzteil ist bekannt. Meist umfassen die für 4-sitzige Cabriolets vorgesehenen Windschotts ein waagerechtes Bauteil, das die hintere Sitzreihe abdeckt. Die Windschotts reduzieren den von hinten nach vorne gerichteten Luftstrom der Wirbel bzw. leiten ihn nach oben ab und schützen so die Personen in den vor dem Windschott befindlichen Sitzen.

Aus der DE 43 32 938 C 1 ist ein Windschott bekannt, das selbsttätig beim Öffnen des Verdecks in seine etwa senkrechte Wirkstellung verlagert wird.

Aus der DE 198 41 788 A1 ist es bekannt, ein Windschott an der Rückseite der Vordersitze selbst zu befestigen. Das Windschott ist dabei zwischen einer unteren Position und der oberen Wirkstellung verlagerbar.

Ferner ist aus der DE 198 26 672 A1 ein Windschutz bekannt, der an einem ausfahrbaren Überrollbügel befestigt ist, der zwischen einer abgesenkten Ruhelage, einer Zwischenstellung, in der der Windschutz aktiviert ist, und einer voll ausgefahrenen Stellung verlagerbar ist.

Nachteilig ist bei diesen Windschotts, daß sie nur eine Verringerung der störenden Windturbulenzen in der vorderen Sitzreihe bewirken. Zudem erschweren oder verhindern sie konstruktionsbedingt die Benutzung der Rücksitze.

Deflektoren, auch Windabweiser genannt, wie sie beispielsweise aus der DE 197 34 249 A1, DE 199 30 049 C2 oder US 6,416,120 B1 hervorgehen, versuchen ihre Wirkung durch ein im Bereich der Windschutzscheibe angeordnetes Luftstromleitelement zu erzielen, das den von der Windschutzscheibe kommenden Luftstrom über den Fahrgastraum ablenken und hinwegleiten soll. Nachteilig ist bei derartigen Windabweisern, daß aufwendige Konstruktionen der Windschutzscheibenhalterung bzw. Rahmen nötig sind, um die Windabweiser zu integrieren oder anzubringen. Zudem wird durch die aus konstruktiven und ästhetischen Gründen relativ kleinen Windabweiser keine ausreichende Verringerung der Windwirbelbelastung der Rücksitze erreicht. Ferner wird durch diese Art der Windschutzvorrichtungen der Luftwiderstand der offenen Fahrzeuge erhöht, was den Kraftstoffverbrauch negativ erhöht.

Der Erfindung liegt daher die Aufgabe zu Grunde, eine Windabweisvorrichtung zu schaffen, die die Belastung der Insassen durch Windturbulenzen in einem Personenkraftwagen bei geöffnetem Verdeck nicht nur in der vorderen Sitzreihe, sondern auch auf den Rücksitzen verringert und die Benutzbarkeit der Rücksitze nicht oder möglichst wenig einschränkt. Zudem soll die Windabweisvorrichtung konstruktiv einfach sein und den Luftwiderstand des Personenkraftwagens nicht oder nur wenig erhöhen.

Diese Aufgabe wird durch die in Anspruch 1 wiedergegebene Windabweisvorrichtung dadurch gelöst, daß das Luftstromleitelement in seiner Wirkstellung im Bereich hinter und oberhalb des Kopfbereichs der ersten Sitzreihe angeordnet ist, derart, daß den von der Oberkante des Windschutzscheibenrahmens abfließenden Luftstrom aufnimmt und zumindest teilweise über die Passagiere der hinteren Sitzreihen hinwegleitet.

Der Luftstrom fließt demnach über die Oberkante des Windschutzscheibenrahmens und über die erste Sitzreihe hinweg. Dort würde der Luftstrom üblicherweise in den Bereich der hinteren Sitzreihe eindringen und Wirbel verursachen. Durch das erfindungsgemäße Luftstromleitelement wird der Luftstrom aber über die hintere Sitzreihe hinweg "gehoben" bzw. gelenkt.

Die genaue Wirkstellung des Luftstromleitelements wird auf die äußere Kontur des jeweiligen Fahrzeugs abgestimmt, sie liegt jedoch immer im Bereich hinter und oberhalb des Kopfbereichs der ersten Sitzreihe. Dort behindert es die Passagiere auf den hinteren Sitzreihen nicht und der Zugang zu diesen Sitzreihen ist weiterhin möglich.

Vorteilhafterweise ist dabei das Luftstromleitelement als ein strömungsgünstig geformter, sich quer zur Längsrichtung des Personenkraftwagens erstreckender Flügel ausgebildet. Dieser erstreckt sich zweckmäßiger Weise zwischen den Seiten des Innenraums bzw. deren gedachten Verlängerung nach oben. Dabei kann die Breite des Luftstromleitelements derart gewählt werden, daß das Verdeck bei in Wirkstellung befindlichem Luftstromleitelement geschlossen werden kann.

Das Luftstromleitelement kann in Strömungsrichtung des Luftstroms und quer zu dieser im wesentlichen waagerecht ausgerichtet sein. Unter "im wesentlichen waagerecht" soll eine Ausrichtung verstanden werden, bei der das Luftstromleitelement in Strömungsrichtung und quer dazu gesehen um nicht mehr als 20° von der Waagerechten abweichend ausgerichtet ist. Bevorzugt ist eine Abweichung von weniger als 15°, noch bevorzugter weniger als 10° und höchst bevorzugt weniger als 5°. Auch andere Ausgestaltungen des Luftstromleitelements sind denkbar, wie z. B. eine gekrümmte, gezackte oder gewellte Form, um evtl. auftretende, regelmäßige Wirbelablösungen zu vermeiden.

Damit der Luftwiderstand nicht oder nur geringfügig erhöht und die Luftleitwirkung optimiert wird, weist das Luftstromleitelement ein aerodynamisches Profil auf. Hierbei handelt es sich vorzugsweise um ein tragflächenartiges Profil. Bei entsprechender Gestaltung des Profils kann die Luftleitwirkung noch durch eine Sogkomponente verbessert werden. Aus aerodynamischen Gründen ist jedoch ein asymmetrisches Profil bevorzugt, da hierdurch die Luftleitwirkung weiter optimiert wird.

Das Profil kann in Fahrtrichtung gesehen symmetrisch ausgebildet sein. Das Luftleitelement kann dann zweiteilig ausgebildet sein, was dessen Handhab- und Verstaubarkeit erleichtert. Beide Teile können dann sogar baugleich sein, was sich vorteilhaft auf den Konstruktions- und Herstellungsaufwand auswirkt.

Das Luftstromleitelement wird vorzugsweise von mindestens einem Träger gehalten, der oder die insbesondere seitlich ansetzen und zur Befestigung am Personenkraftwagen dienen. Die Träger können verschiedene Ausgestaltungen besitzen, von denen einige nachfolgend genannt werden.

Zunächst können die Träger starre, fest eingebaute Konstruktionen sein. Andererseits können die Träger abnehmbar oder ausfahrbar ausgestaltet sein. In diesen Fällen ist eine schnelle und sichere Verriegelung vorgesehen, die den am Luftstromleitelement auftretenden Kräften widersteht, die an die Träger weitergeben werden.

Der mindestens eine Träger kann im Bereich der B-Säule des Personenkraftwagens angelenkt sein. Dann bietet es sich vorzugsweise an, daß er um eine quer zur Längsrichtung des Personenkraftwagens verlaufende Achse verschwenkbar angelenkt ist.

Es ist jedoch auch möglich, daß die Träger teleskopartig ausgebildet sind. Die Träger können ferner im Bereich der B-Säule steckbar oder herausziehbar sein.

Es sind aber auch Ausgestaltungen denkbar, bei denen die Träger aus dem Bereich der hinteren Radhäuser und/oder des Kofferraums in die Wirkstellung ausfahrbar sind.

Auch können die Träger herausklappbar sein.

Kombinationen der vorstehend genannten Träger sind ebenfalls möglich.

Das Luftstromleitelement kann mit den Trägern einstückig oder lösbar montierbar ausgebildet sein.

Ist das Luftstromleitelement lösbar montierbar ausgebildet, so kann es faltbar ausgebildet sein, so daß es Platz sparend im Kofferraum oder unter den Sitzen verstaubar ist.

Das Luftstromleitelement kann aber auch zwei- oder mehrteilig ausgebildet sein. Dann sind die Teile des Luftstromleitelements verbind- und/oder verriegelbar ausgebildet. Dies ermöglicht neben der Verbindung der Teile eine höhere Festigkeit bzw. Belastbarkeit des Luftstromleitelements und zudem eine Platz sparende Aufbewahrung.

Das Luftstromleitelement ist bei lösbar montierbarer Ausbildung auch mit den Trägern verriegelbar ausgebildet, so daß die auftretenden Kräfte das Luftstromleitelement nicht abheben.

In einer weiteren Ausgestaltung ist das Luftstromleitelement zweigeteilt und jedes Teil jeweils mit einem Träger einstückig ausgebildet. Diese zwei Bauteile können etwa L-förmig ausgebildet sein, wobei der eine Schenkel des L jeweils den Träger und der andere die Hälfte des Luftstromleitelements bildet. Auch hier ist eine einrastende Verriegelung vorgesehen. Idealerweise ist eine spiegelsymmetrische Anbringung der Bauteile vorgesehen.

Sollte dies aber aus aerodynamischen Gründen nicht möglich sein, so kann auch eine asymmetrische Auslegung der Teile erfolgen und die Bauteile unterscheiden sich.

Das Ausfahren bzw. die Aktivierung der Windabweisvorrichtung kann manuell oder automatisch erfolgen. Bei manueller Aktivierung kann z. B. ein Schalter betätigt werden. Dies kann im Stand und/oder bis zu einer gewissen Fahrgeschwindigkeit erlaubt sein, bis zu der eine gefahrlose Betätigung möglich ist. Bei automatischer Aktivierung kann die Windschutzvorrichtung bei einer bestimmten, ggf. einstellbaren Geschwindigkeit ausgefahren werden. Auch eine Kombination der manuellen und automatischen Aktivierung ist denkbar. So könnte die Windschutzvorrichtung bzw. der Luftstromleitflügel bei Zweipersonenbetrieb deaktiviert werden.

Es ist weiterhin möglich, Windschutzvorrichtung beim Öffnen des Verdecks automatisch zu aktivieren bzw. auszufahren. Hierzu können die Träger mechanisch, elektromechanisch, pneumatisch, hydraulisch usw. betätigt werden.

Bei offenen Personenkraftwagen, die ggf. bereits einem Überrollschutz im Bereich zwischen der vorderen und hinteren Sitzreihe aufweisen, ist es denkbar ein erfindungsgemäßes Luftstromleitelement nachzurüsten. Dies kann z. B. durch Befestigung des Flügels am Querträger des Überrollschutzes erfolgen.

Ferner kann eine zusätzliche Windschutzvorrichtung der eingangs genannten Art vorgesehen sein. Dies ermöglicht eine weitere Optimierung der Luftleitwirkung bzw. Verringerung oder Verhinderung der Windwirbel im gesamten Fahrgastraum. Hierbei kann ein zusätzliches Windschott hinter der zweiten Sitzreihe, ein Deflektor an dem Windschutzscheibenrahmen oder eine Kombination dieser Windschutzvorrichtungen vorgesehen sein. Auch ein weiteres Luftstromleitelement kann z. B. hinter der hinteren Sitzreihe vorgesehen sein oder mit einem Windschott kombiniert werden.

Die Windabweisvorrichtung kann zusätzlich die Funktion eines Überschlagschutzes ausbilden. Die Windabweisvorrichtung kann dazu auch automatisch ausgelöst bzw. ausgefahren werden, sollte sie nicht bereits aktiviert sein. Das Luftstromleitelement bildet dann beispielsweise mit den Trägern einen Überrollbügel aus.

Aus der nachfolgenden Beschreibung ergeben sich weitere Merkmale, Einzelheiten und Vorteile der vorliegenden Erfindung. Es zeigen:
- Fig. 1: eine perspektivische Ansicht einer schematischen Abbildung eines mit der erfindungsgemäßen Windabweisvorrichtung versehenen 4-sitzigen Cabriolets;
- Fig. 2: eine perspektivische Ansicht einer Ausführungsform des Luftstromleitelements der erfindungsgemäßen Windabweisvorrichtung aus Fig. 1;
- Fig. 3: eine perspektivische Ansicht einer weiteren Ausführungsform des Luftstromleitelements der erfindungsgemäßen Windabweisvorrichtung aus Fig. 1;
- Fig. 4: eine perspektivische Ansicht einer schematischen Abbildung eines mit einer weiteren Ausführungsform der erfindungsgemäßen Windabweisvorrichtung versehenen 4-sitzigen Cabriolets und
- Fig. 5: eine perspektivische Ansicht einer schematischen Abbildung eines mit einer weiteren Ausführungsform der erfindungsgemäßen Windschutzvorrichtung versehenen 4-sitzigen Cabriolets.

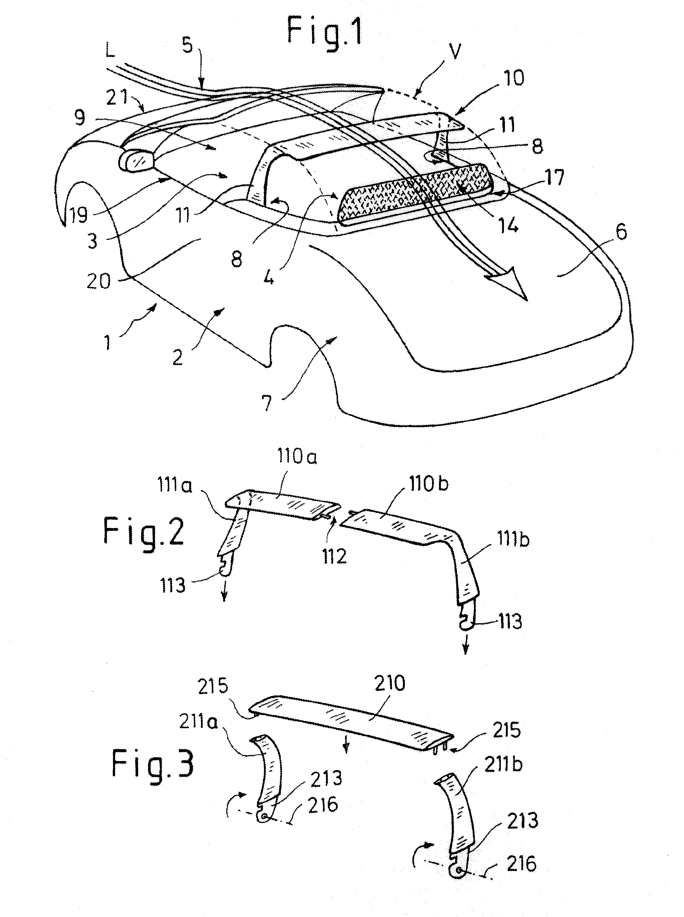

In der Figur 1 ist ein Cabriolet 1 dargestellt, das mit einer erfindungsgemäßen Windabweisvorrichtung 10 versehen ist.

Das Cabriolet 1 umfasst eine Karosserie 2, die eine Windschutzscheibe 5 trägt, hinter welcher der Fahrgastraum 9 angeordnet ist, der seinerseits in einem unteren, bis zur Gürtellinie 19 der Karosserie 2 reichenden Bereich von der Karosserie 2 umschlossen ist. Der Fahrgastraum 9 umfasst eine vordere Sitzreihe 3 und eine hintere Sitzreihe 4. Hinter dem Fahrgastraum 9 befindet sich der Kofferraum 6 und an dessen Seiten die Radhäuser 7.

Im Bereich der B-Säule 20 des Cabriolets hinter der vorderen Sitzreihe 3 erstreckt sich jeweils links und rechts an den Innenraumseiten ein Träger 11 nach oben. An und zwischen diesen Trägern 11 schließt sich ein Luftstromleitelement 10 an. Die Träger 11 sind so positioniert und ausgebildet, daß sich das Luftstromleitelement 10 im Bereich hinter und oberhalb des Kopfbereichs der ersten Sitzreihe 3 befindet. Dies ist seine Wirkstellung.

Das Luftstromleitelement 10 weist eine Länge auf, die etwa dem Abstand der Innenraumseiten 8 des Cabriolets 1 entspricht. Günstigerweise verlaufen die Träger 11 nach oben leicht trapezförmig aufeinander zu, so daß das Luftstromleitelement 10 bei geschlossenem Verdeck (angedeutet durch die gestrichelte Linie V) nicht stört. Es ist sogar denkbar, den Verbund aus Träger 11 und Luftstromleitelement 10 so zu gestalten, daß das Verdeck von diesem gestützt wird.

Hinter der hinteren Sitzreihe 4 des Fahrgastraums befindet sich eine Ablage 17, von dem aus sich zusätzlich ein konventionelles Windschott 14 erstreckt. Dies kann z. B. mit feinmaschigem Gewebe bespannt sein oder auch aus durchsichtigem Kunststoff bestehen.

Wie durch Pfeil L in Fig. 1 angedeutet fließt der Luftstrom L bei fahrendem Fahrzeug zunächst an der Motorhaube 21 des Cabriolets entlang und wird durch die Windschutzscheibe 5 nach oben abgelenkt. Von der Kante der Windschutzscheibe 5 fließt der Luftstrom L weiter über den Kopfbereich der vorderen Sitzreihe 3 hinweg und trifft auf das erfindungsgemäße Luftstromleitelement 10, das den Luftstrom über den Bereich der hinteren Sitzreihe 4 leitet. Das zusätzliche Windschott optimiert den Luftstromverlauf und verhindert zusätzlich von hinten nach vorn wirkende Wi r-bel im Fahrgastraum 9.

Die Träger 11 und das Luftstromleitelement 10 sind in der in Fig. 1 dargestellten Ausführungsform einstückig ausgebildet. Sie können fest in das Cabriolet 1 integriert sein oder auch abnehmbar gestaltet sein. Dann werden die Trägerunterseiten in entsprechende Halterungen im Bereich der B-Säule eingesteckt und dort verriegelt.

Die Breite der Träger 11 ist in den vorliegenden Beispielen geringer als die Ausdehnung des Luftstrom leitelements 10 in Richtung des Luftstroms L. Die Träger 11 und das Luftstromleitelement 10 bilden aber eine gemeinsame vordere Kante aus, so daß das Luftstromleitelement 10 nach hintenüber die Träger übersteht.

In den Figuren 2 und 3 sind weitere Ausführungsformen erfindungsgemäßer Windschutzvorrichtungen dargestellt, deren Träger 111, 211 und Luftstromleitelement 110,210 nicht einstückig ausgebildet sind.

Bei der Ausführungsform nach Fig. 2 ist das Luftstromleitelement 110 zweigeteilt und jedes Teil 110a,b jeweils mit einem Träger 11a,b einstückig ausgebildet. Diese zwei Bauteile sind etwa L-förmig ausgebildet sein, wobei der eine Schenkel des L jeweils den Träger 111a,b und der andere die Hälfte 110a,b des Luftstromleitelements bildet. Auch hier ist eine einrastende Verriegelung 112 zwischen den Hälften des Luftstromleitelements vorgesehen. Idealerweise sind die zwei Bauteile spiegelsymmetrisch ausgeführt.

Zur Inbetriebnahme werden zunächst die L-förmigen Bauteile aus Träger und Luftstromleitelement über die Verriegelung 212 verbunden und dann die unteren Endbereiche 113 der Träger 111a,b in im Bereich der B-Säule liegende Halterungen eingesteckt und verriegelt.

Bei der Ausführungsform nach Fig. 3 ist das Luftstromleitelement 210 einteilig ausgebildet und jeweils seitlich mit einem Träger 211a,b über eine verriegelbare Steckverbindung 215 verbunden. Die Träger 211 a,b sind um eine im Bereich der B-Säule liegende Achse 216 schwenkbar bzw. aus der Ruhestellung in die Wirkstellung aufstellbar und dort verriegelbar. Die Achse 216 verläuft etwa waagerecht und etwa quer zur Längsrichtung des Cabriolets und durchläuft die Unterseiten 213 der Träger 211 a,b. In der Ruhestellung sind die Träger 211 a,b in den Seiten der Karosserie 2 neben der hinteren Sitzreihe 3 versenkt. Das Luftstromleitelement 210 kann im Bereich der Ablage, unter den Sitzen oder im Kofferraum verstaut werden.

Bei dieser Ausführungsform werden zur Inbetriebnahme zunächst die Träger in die Arbeitsstellung geschwenkt, verriegelt und anschließend das Luftstromleitelement 210 angesteckt und verriegelt.

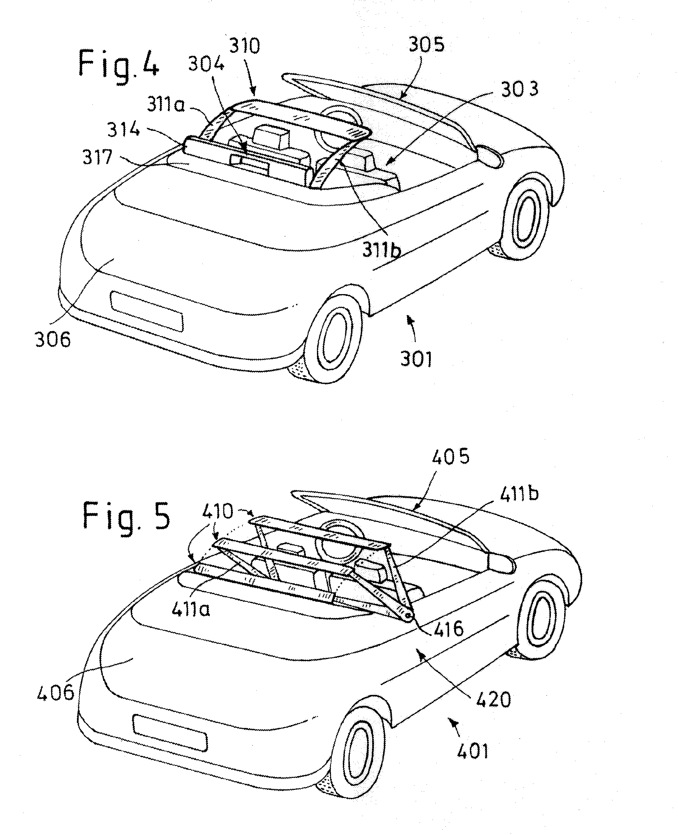

In den Figuren 4 und 5 ist ebenfalls ein Figur 1 entsprechendes Cabriolet 301 bzw. 401 dargestellt, das jeweils mit einer weiteren Ausführungsform einer erfindungsgemäßen Windabweisvorrichtung versehen ist. Sich entsprechende Teile sind daher jeweils mit einem im Vergleich zu den Figuren 1 - 3 um 100 (Fig. 4) bzw. 200 (Fig. 5) erhöhtem Bezugszeichen gekennzeichnet.

Bei der Ausführungsform nach Fig. 4 sind die Träger 311a,b als teleskopartig, je links und rechts hinter der hinteren Sitzreihe 304 aus dem Bereich des Kofferraums nach vorn in die Wirkstellung ausfahrende Träger ausgebildet. Sie sind einstückig mit dem Luftstromleitelement 310 ausgebildet und mit diesem seitlich verbunden. So wird der Bereich der hinteren Sitzreihe und die Sicht nach Hinten möglichst wenig eingeschränkt.

In der Ruhestellung befinden sich die Träger 311a,b unterhalb der Ablage 317. Das Luftstromleitelement 310 kann ebenfalls versenkt sein, auf der Ablage 317 liegen oder diese ausbilden.

Zur Optimierung des Windschutzes ist ferner ein Windschott 314 vorgesehen, das starr, versenkbar oder abnehmbar ausgestaltet sein kann. Im mittleren Bereich ist das Windschott 314 durchsichtig gestaltet, so daß die Sicht nach hinten möglichst frei ist. Dies kann z. B. durch die Verwendung von feinmaschigem Gewebe oder durchsichtigem Kunststoff erreicht werden. Das Windschott 317 kann ebenso wie die Windabweisvorrichtung selbst zusätzlich eine Überrollschutzfunktion innehaben.

Bei der Ausführungsform nach Fig. 5 sind die Träger 411 a,b als um eine im Bereich der B-Säule 420 liegende Achse 416 nach vorn in die Wirkstellung verschwenkbare Träger ausgebildet. Figur 5 zeigt die Windabweisvorrichtung in verschiedenen Positionen, die beim Aus- bzw. Einfahren der Windabweisvorrichtung durchlaufen werden.

Das ebenfalls optionale Windschott (nicht dargestellt) befindet sich bei der Ausführungsform nach Fig. 5 im eingefahrenen bzw. abgenommenen Zustand.

## Patentansprüche

1. Windabweisvorrichtung für einen mit einem zurückklappbaren Verdeck versehenen Personenkraftwagen (1, 301, 401), insbesondere für ein Cabriolet oder einen Roadster, mit einem Luftstromleitelement,
**dadurch gekennzeichnet, daß**
das Luftstromleitelement (10, 110, 210, 310, 410) in seiner Wirkstellung im Bereich hinter und oberhalb des Kopfbereichs der ersten Sitzreihe (3, 303, 403) derart angeordnet ist, daß es den von der Oberkante des Windschutzscheibenrahmens abfließenden Luftstrom (L) zumindest teilweise über auf der hinteren Sitzreihe befindliche Insassen hinwegleitet.

2. Windabweisvorrichtung nach Anspruch 1,
**dadurch gekennzeichnet, daß**
das Luftstromleitelement (10, 110, 210, 310, 410) einen sich quer zur Längsrichtung des Personenkraftwagens erstreckenden Flügel umfasst.

3. Windabweisvorrichtung nach Anspruch 1 oder 2,
**dadurch gekennzeichnet, daß**
das Luftstromleitelement (10, 110, 210, 310, 410) in Strömungsrichtung des Luftstroms (L) und quer zu dieser im wesentlichen waagerecht ausgerichtet ist.

4. Windabweisvorrichtung nach einem der Ansprüche 1 bis 3,
**dadurch gekennzeichnet, daß**
das Luftstromleitelement (10, 110, 210, 310, 410) ein aerodynamisches Profil aufweist.

5. Windabweisvorrichtung nach einem der vorhergehenden Ansprüche,
**dadurch gekennzeichnet, daß**
das Luftstromleitelement (10, 110, 210, 310, 410) mindestens einen Träger (11, 111, 211, 311, 411) zur Befestigung an dem Personenkraftwagen umfasst.

6. Windabweisvorrichtung nach Anspruch 5,
**dadurch gekennzeichnet, daß**
das der mindestens eine Träger (211, 411) um eine quer zur Längsrichtung des Personenkraftwagens verlaufende Achse (216, 416) verschwenkbar angelenkt ist.

7. Windabweisvorrichtung nach Anspruch 5 oder 6,
**dadurch gekennzeichnet, daß**
das der mindestens eine Träger (311) teleskopartig ausgebildet ist.

8. Windabweisvorrichtung nach einem der Ansprüche 5 bis 7,
**dadurch gekennzeichnet, daß**
das die Träger (11, 111) steckbar sind.

9. Windschutzvorrichtung nach einem der Ansprüche 5 bis 7,
**dadurch gekennzeichnet, daß**
das die Träger (11, 111) herausziehbar sind.

10. Windabweisvorrichtung nach einem der Ansprüche 5 bis 7,
**dadurch gekennzeichnet, daß**
das die Träger herausklappbar sind.

11. Windabweisvorrichtung nach einem der Ansprüche 5 bis 10,
**dadurch gekennzeichnet, daß**
das der mindestens eine Träger (211, 411) im Bereich der B-Säule (20, 420) des Personenkraftwagens angelenkt ist.

12. Windabweisvorrichtung nach einem der Ansprüche 5 bis 10,
**dadurch gekennzeichnet, daß**
das die Träger (311) derart ausgestaltet sind, daß sie aus dem Bereich der hinteren Radhäuser (307) und/oder des Kofferraums (306) in die Wirkstellung ausfahrbar sind.

13. Windabweisvorrichtung nach einem der Ansprüche 5 bis 12,
**dadurch gekennzeichnet, daß**
das Luftstrom leitelement (10, 310, 410) mit den Trägern (11, 311, 411) ei n-stückig ausgebildet ist.

14. Windabweisvorrichtung nach einem der Ansprüche 5 bis 12,
**dadurch gekennzeichnet, daß**
das Luftstromleitelement (210) mit den Trägern (211) lösbar montierbar ausgebildet ist.

15. Windabweisvorrichtung nach Anspruch 14,
**dadurch gekennzeichnet, daß**
das Luftstromleitelement faltbar ausgebildet ist.

16. Windabweisvorrichtung nach Anspruch 14 oder 15,
**dadurch gekennzeichnet, daß**
das Luftstromleitelement zweiteilig ausgebildet ist.

17. Windabweisvorrichtung nach einem der Ansprüche 14 bis 16,
**dadurch gekennzeichnet, daß**
die Teile des Luftstromleitelements verbind- und/oder verriegelbar ausgebildet sind.

18. Windabweisvorrichtung nach einem der Ansprüche 14 bis 17,
**dadurch gekennzeichnet, daß**
das Luftstromleitelement (210) mit den Trägern (211) verriegelbar ausgebildet ist.

19. Windabweisvorrichtung nach einem der Ansprüche 5 bis 12,
**dadurch gekennzeichnet, daß**
das Luftstromleitelement (110) zweigeteilt ist und jedes Teil (110a,b) jeweils mit einem Träger (111a,b) einstückig ausgebildet ist.

20. Windabweisvorrichtung nach einem der Ansprüche 1 bis 19,
**dadurch gekennzeichnet, daß**
das Mittel vorgesehen sind, mittels welcher das Luftstromleitelement beim Öffnen des Verdecks in seine Wirkstellung bewegt wird.

21. Windabweisvorrichtung nach einem der Ansprüche 1 bis 20,
**dadurch gekennzeichnet, daß**
es eine Überschlagschutzfunktion ausbildet.

22. Personenkraftwagen mit einer Windabweisvorrichtung nach einem der Ansprüche 1 bis 21.

23. Personenkraftwagen nach Anspruch 22,
**dadurch gekennzeichnet, daß**
es ein zusätzliches Windschott (14, 314) hinter der zweiten Sitzreihe (4, 304) vorgesehen ist.

24. Personenkraftwagen nach Anspruch 22 oder 23,
**dadurch gekennzeichnet, daß**
es ein Deflektor vorgesehen ist.
